# FASCICULE DE BREVET EUROPEEN

(11) **EP 0 804 380 B1**
(45) Date de publication et mention de la délivrance du brevet: **12.02.2003**
(21) Numéro de dépôt: 95940334.6
(22) Date de dépôt: 20.11.1995
(51) Int. Cl.: C01B 17/04, B01J 27/224

(54) **PROCEDE ET CATALYSEUR POUR OXYDER EN SOUFRE PAR VOIE CATALYTIQUE L'H 2?S CONTENU EN FAIBLE CONCENTRATION DANS UN GAZ**
VERFAHREN UND KATALYSATOR ZUR KATALYTISCHEN OXIDATION VON SCHWEFELWASSERSTOFF INEINEM GASSTROM IN NIEDRIGER MENGE ANWESEND
METHOD AND CATALYST FOR CATALYTICALLY OXIDISING A LOW CONCENTRATION OF H 2?S IN A GAS TO GIVE SULPHUR

(43) Date de publication de la demande: 05.11.1997
(73) Titulaire: ELF AQUITAINE PRODUCTION, 92400 Courbevoie (FR)
(72) Inventeur: PHILIPPE, André, F-64300 Orthez (FR); SAVIN-PONCET, Sabine, F-64160 Buros (FR); NOUGAYREDE, Jean, F-64000 Pau (FR); LEDOUX, Marc, F-67000 Strasbourg (FR); PHAM HUU, Cuong, F-67700 Saverne (FR); CROUZET, Claude, F-67000 Strasbourg (FR)
(74) Mandataire: Cabinet Hirsch
(86) Numéro de dépôt international: FR9501524
(87) Numéro de publication internationale: WO97019019

(56) Documents cités:
- EP-A- 0 134 594
- EP-A- 0 422 999
- EP-A- 0 543 752
- WO-A-87/02653
- WO-A-94/21555
- DD-A- 129 037
- FR-A- 2 511 663
- US-A- 2 386 390

## Description

L'invention se rapporte à un procédé pour oxyder directement en soufre, par voie catalytique, l'H₂S contenu en faible concentration dans un gaz.

Pour récupérer l'H₂S contenu en faible concentration, à savoir concentration inférieure à 20 % en volume et plus particulièrement comprise entre 0,001 % et 20 % et tout spécialement allant de 0,001 % à 10 % en volume, dans des gaz de provenances diverses, on peut faire appel, notamment, à des procédés mettant en oeuvre une oxydation catalytique directe de l'H₂S en soufre selon la réaction H₂S + 1/2 O₂ → S + H₂O.

Dans de tels procédés, on fait passer le gaz à traiter renfermant l'H₂S en mélange avec une quantité appropriée d'un gaz contenant de l'oxygène libre, par exemple, air, oxygène ou encore air enrichi en oxygène, au contact d'un catalyseur d'oxydation de l'H₂S en soufre en réalisant ce contact à des températures soit supérieures au point de rosée du soufre formé, auquel cas le soufre formé est présent à l'état de vapeur dans le milieu réactionnel issu de la réaction, ou bien à des températures inférieures au point de rosée du soufre formé, auquel cas ledit soufre se dépose sur le catalyseur, ce qui nécessite de régénérer périodiquement le catalyseur chargé de soufre par balayage au moyen d'un gaz non oxydant ayant une température comprise entre 200 °C et 500 °C.

En particulier, l'oxydation de l'H₂S en soufre à des températures supérieures au point de rosée du soufre, c'est-à-dire à des températures supérieures à environ 180 °C, peut être réalisée au contact d'un catalyseur consistant en oxyde de titane (EP-A-0078690), en oxyde de titane renfermant un sulfate de métal alcalino-terreux (WO-A-8302068), en oxyde de titane renfermant de l'oxyde de nickel et éventuellement de l'oxyde d'aluminium (EP-A-0140045), en un oxyde du type oxyde de titane, oxyde de zirconium ou silice associé à un ou plusieurs composés de métaux de transition choisis parmi Fe, Cu, Zn, Cd, Cr, Mo, W, Co et Ni, de préférence Fe, et éventuellement à un ou plusieurs composés de métaux précieux choisis parmi Pd, Pt, Ir et Rh, de préférence Pd (FR-A-2511663), ou encore en une alumine stabilisée thermiquement et associée à un ou plusieurs composés de métaux de transition tels que précités, notamment Fe, et éventuellement à un ou plusieurs composés de métaux précieux choisis parmi Pd, Pt, Ir et Rh (FR-A-2540092).

L'oxydation de l'H₂S en soufre en opérant à des températures telles que le soufre formé se dépose sur le catalyseur peut être effectuée, quant à elle, au contact d'un catalyseur consistant, par exemple, en un ou plusieurs composés tels que sels,oxydes ou sulfures de métaux de transition, par exemple Fe, Cu, Cr, Mo, W, V, Co, Ni, Ag et Mn, en association avec un support de type alumine activée, bauxite, silice/alumine ou zéolithe (FR-A-2277877). On peut encore réaliser cette oxydation de l'H₂S avec dépôt de soufre sur le catalyseur au contact d'un catalyseur consistant en une phase catalytique choisie parmi les oxydes, sels ou sulfures des métaux V, Mo, W, Ni et Co associée à un support en charbon actif (demande de brevet français n° 9302996 du 16.03.1993).

Les catalyseurs tels que précités constitués d'une phase catalytique à base d'au moins un oxyde, sel ou sulfure d'un métal de transition associée à un support consistant en au moins un matériau choisi parmi l'alumine, l'oxyde de titane, l'oxyde de zirconium, la silice, les zéolithes, les mélanges silice/alumine, les mélanges silice/oxyde de titane et le charbon actif, qui sont utilisés pour l'oxydation catalytique de l'H₂S en soufre, présentent encore certaines insuffisances à l'usage prolongé. En particulier, les catalyseurs dont le support est à base d'alumine sont susceptibles d'évoluer dans le temps par sulfatation. En ce qui concerne les catalyseurs dont le support consiste en charbon actif, des précautions doivent être prises lors de leur mise en oeuvre pour éviter la combustion du support. De plus, pour ces divers catalyseurs, la phase catalytique imprégnant le support a tendance à migrer dans la maille du support, ce qui rend difficile voire même souvent impossible la récupération du métal de la phase catalytique dans le catalyseur usé. Enfin, les catalyseurs précités ont une conductibilité thermique médiocre, ce qui ne permet pas de réaliser un contrôle efficace de la température au sein des lits catalytiques les contenant par un échange thermique avec un fluide de refroidissement.

Le document EP-A-0 422 999 décrit l'oxydation directe de l'H₂S en soufre au moyen d'oxygène au contact d'un catalyseur de forme monolithique, en opérant à des températures supérieures à 150 °C et plus particulièrement comprises entre 200°C et 550°C. Le catalyseur peut être constitué d'une phase catalytique à base d'au moins un oxyde métallique et déposée sur un support monolithique métallique ou en matière céramique. Le support monolithique en matière céramique peut être en particulier à base d'un matériau tel que cordiérite, alumine, mullite, zirconmullite, titanate de baryum, porcelaine, oxyde de thorium, oxyde de magnésium, stéatite ou même carbure de bore ou de silicium. Les oxydes métalliques, qui peuvent petre appliqués, en tant que phase active,sur le support sont en particulier choisis parmi les oxydes de métaux tels que Ce, Zr, Mo, Co, terres rares trivalents, Ni, Fe, Sn, Al, Ti, Cr, Zn et V. Comme indiqué à la page 5, lignes 23-24, l'étape d'oxydation catalytique fournit un flux gazeux, qui est traité pour condenser et séparer le soufre qu'il contient.

Le document US-A-2 386 390 concerne l'oxydation de l'H₂S en soufre au moyen d'air au contact d'une masse poreuse, disposée dans une zone de réaction et ayant ou non une action catalytique, en opérant à des températures comprises entre 500°C et 1000°C et plus spécialement entre 700°C et 800°C, le soufre formé quittant la zone de réaction à l'état de vapeur. La masse de contact peut notamment consister en un matériau tel que le carborundum, qui est du carbure de silicium.

Le document EP-A-0 543 752 traite de la préparation d'une mousse de carbure métallique ou de carbure de silicium, destinée à servir de catalyseur ou de support de catalyseur pour l'industrie chimique ou pétrochimique ou pour les pots d'échappement. Le carbure en mousse obtenu présente, entre autres, une surface spécifique BET comprise entre 20m²/g et 100m²/g.

Le document DD-A-129 037 a pour objet une amélioration de la sélectivité des catalyseurs supportés à base de vanadium et éventuellement de molybdène et/ou de titane, qui sont utilisés pour promouvoir des réactions d'oxydation ou de réduction, par exemple oxydation de SO₂ en SO₃. L'amélioration consiste à préparer ces catalyseurs à partir d'un mélange d'ingrédients précurseurs renfermant, en poids, 3% à 30% d'une poudre de carbure de silicium.

Le document WO-A-87 02 653 concerne un procédé d'élimination des composés soufrés contenus dans un gaz résiduaire d'usine à soufre avec récupération de ces composés sous forme de soufre. Dans ce procédé, on soumet le gaz résiduaire d'usine à soufre à un traitement d'hydrogénation et d'hydrolyse pour amener les composés soufrés qu'il renferme sous l'unique forme d'H₂S, puis on refroidit l'effluent gazeux issu du traitement d'hydrogénation/hydrolyse pour amener la teneur en eau de cet effluent à une valeur inférieure à 10 % en volume. On soumet ensuite l'effluent gazeux appauvri en eau à une oxydation catalytique à une température supérieure à 150°C au contact d'un catalyseur d'oxydation conventionnel, par exemple catalyseur à support d'alumine, de silice ou d'oxyde de titane, pour réaliser une oxydation ménagée de l'H₂S contenu dans l'effluent et former un courant gazeux renfermant l'H₂S et SO₂ dans un rapport molaire H₂S : SO₂ d'environ 2:1 et du soufre vapeur. On refroidit ensuite en dessous de 160°C le courant gazeux issu de l'oxydation, pour séparer le soufre qu'il contient par condensation et on amène le courant gazeux refroidi renfermant H₂S et SO₂ au contact d'un catalyseur CLAUS pour former du soufre par réaction d'H₂S sur SO₂, en opérant à une température suffisamment basse pour que le soufre formé se dépose sur le catalyseur, et on évacue de l'étape de réaction CLAUS un gaz résiduaire épuré à teneur très faible en composés soufrés. Le catalyseur CLAUS chargé de soufre est soumis périodiquement à une opération de balayage au moyen d'un gaz non oxydant ayant une température entre 200°C et 500°C pour vaporiser le soufre et ainsi régénérer le catalyseur.

L'invention a pour objet un procédé pour oxyder en soufre, par voie catalytique, l'H₂S : contenu en faible concentration dans un gaz, lequel procédé est du type dans lequel on fait passer ledit gaz renfermant H₂S avec un gaz renfermant de l'oxygène libre, en quantité propre à fournir un rapport molaire O₂ : H₂S allant de 0,05 à 10, au contact d'un catalyseur d'oxydation sélective de l'H₂S en soufre constitué d'une phase catalytiquement active associée à un support en carbure de silicium, ladite phase active renfermant au moins un métal se présentant sous la forme d'un composé de métal ou/et à l'état élémentaire, et il se caractérise en ce que l'on met en oeuvre l'oxydation de l'H₂S au contact du catalyseur à des températures inférieures au point de rosée du soufre formé lors de l'oxydation, ledit soufre se déposant sur le catalyseur, et en ce que le gaz à traiter renfermant H₂S contient également une quantité d'eau allant de 15% à 30 % en volume.

Aux températures utilisées selon l'invention pour la mise en oeuvre de la réaction d'oxydation du gaz renfermant H₂S au contact du catalyseur à support de carbure de silicium, qui sont inférieures au point de rosée du soufre formé par l'oxydation et peuvent plus particulièrement être inférieures au point de fusion du soufre, la présence, dans le gaz à traiter renfermant H₂S, d'une quantité d'eau allant de 15 % à 30 % en volume permet d'augmenter substantiellement la durée pendant laquelle l'efficacité du catalyseur se maintient à un niveau optimal.

En particulier, la phase active associée au support en carbure de silicium pour constituer le catalyseur d'oxydation selon l'invention consiste avantageusement en au moins un métal de transition tel que nickel, cobalt, fer, cuivre, argent, manganèse, molybdène, chrome, titane, tungstène et vanadium, ledit métal se présentant sous la forme d'oxyde, de sulfure ou de sel ou/et à l'état élémentaire. Ladite phase active, comptée en poids de métal, représente le plus souvent 0,1 à 20 %, plus particulièrement 0,2 à 15 % et plus spécialement 0,2 à 7 % du poids du catalyseur d'oxydation. Le support en carbure de silicium constitue avantageusement au moins 40 % et plus particulièrement au moins 50 % du poids du catalyseur d'oxydation.

La surface spécifique du catalyseur d'oxydation de l'H₂S en soufre peut varier assez largement selon les conditions de mise en oeuvre du procédé d'oxydation. Avantageusement, ladite surface spécifique, déterminée par la méthode BET d'absorption d'azote à la température de l'azote liquide (norme NF X 11-621), peut représenter 2 m²/g à 600 m²/g et plus spécialement de 10 m²/g à 300 m²/g.

Le catalyseur d'oxydation peut être préparé en faisant appel aux diverses méthodes connues pour incorporer un ou plusieurs composés métalliques à un solide divisé constituant un support de catalyseur. En particulier, on peut opérer par imprégnation du support en carbure de silicium, se présentant sous la forme de poudre, de pastilles, de granulés, d'extrudés ou autres formes d'agglomérés, au moyen d'une solution ou d'un sol, dans un solvant tel que l'eau, du ou des composés métalliques désirés, puis séchage du support imprégné et calcination du produit séché à des températures pouvant aller de 250 °C à 500 °C, en opérant ou non en atmosphère inerte. Le catalyseur calciné peut être soumis à un. traitement de réduction sous hydrogène, par exemple entre 200°C et 500°C, pour faire passer à l'état élémentaire le métal du composé métallique présent dans sa phase active. On peut encore envisager de préparer le catalyseur en opérant de manière à insérer des atomes métalliques catalytiquement actifs tels que précités dans la maille cristalline du carbure de silicium.

Le carbure de silicium utilisé pour constituer le support du catalyseur d'oxydation de l'H₂S en soufre, peut consister en l'un quelconque des carbures de silicium connus sous réserve qu'il présente les caractéristiques requises de surface spécifique, à savoir une surface spécifique, déterminée par la méthode BET d'adsorption d'azote, allant de 2 m²/g à 600 m²/g, plus spécialement de 10 m²/g à 300 m²/g.

En particulier, ledit carbure de silicium peut être préparé en faisant appel à l'une quelconque des techniques, qui sont décrites dans les citations EP-A-0313480 (correspondant à US-A-4914070), EP-A-0440569, EP-A-0511919, EP-A-0543751 et EP-A-0543732.

Le gaz -renfermant de l'oxygène libre utilisé pour l'oxydation, en soufre, de l'H₂S contenu dans le gaz à traiter est généralement de l'air, bien qu'il soit possible d'employer de l'oxygène pur, de l'air enrichi en oxygène ou encore des mélanges, en proportions variées, d'oxygène et d'un gaz inerte autre que l'azote.

Le gaz renfermant de l'oxygène libre et le gaz à traiter renfermant de l'H₂S peuvent être amenés séparément au contact du catalyseur d'oxydation. Toutefois, en vue d'obtenir un milieu réactionnel gazeux très homogène lors du contact avec le catalyseur, il est préférable de mélanger tout d'abord le gaz à traiter renfermant l'H₂S avec le gaz renfermant de l'oxygène libre et d'amener le mélange ainsi réalisé au contact du catalyseur d'oxydation.

Comme indiqué plus haut, le gaz renfermant de l'oxygène libre est utilisé en quantité propre à fournir un rapport molaire O₂ : H₂S allant de 0,05 à 10, plus particulièrement de 0,1 à 7 et tout spécialement de 0,2 à 4 dans le milieu réactionnel arrivant au contact du catalyseur d'oxydation de l'H₂S en soufre.

Les temps de contact du milieu réactionnel gazeux avec le catalyseur d'oxydation peuvent aller de 0,5 seconde à 20 secondes et de préférence de 1 seconde à 12 secondes, ces valeurs étant données dans les conditions normales de pression et de température.

Le procédé d'oxydation catalytique de l'H₂S en soufre selon l'invention est mis en oeuvre à des températures inférieures au point de rosée du soufre formé au cours de la réaction d'oxydation, ledit soufre se déposant sur le catalyseur et l'effluent gazeux recueilli à la sortie de la zone d'oxydation étant substantiellement exempt de soufre. Avantageusement, on peut choisir les températures de mise en oeuvre du procédé selon l'invention dans l'intervalle 30 °C à 180 °C et plus particulièrement dans l'intervalle 80 °C à 160 °C, qui encadre le domaine de solidification du soufre aux alentours de 120 °C.

Préalablement à la phase de mise en oeuvre de la réaction d'oxydation, le catalyseur d'oxydation selon l'invention et en particulier le catalyseur d'oxydation dont la phase active renferme du nickel, peut subir une activation par mise en contact dudit catalyseur avec du soufre élémentaire, en quantité représentant un léger excès, par exemple excès pouvant aller jusqu'à 300 % molaire, par rapport à la quantité stoechiométrique correspondant à une sulfuration maximale du métal de la phase active du catalyseur, ladite mise en contact étant réalisée sous atmosphère inerte, par exemple atmosphère d'hélium ou d'argon, à des températures comprises entre 250°C et 400°C et pendant une durée suffisante, le plus souvent entre 1 heure et 4 heures, pour obtenir une sulfuration maximale du métal de la phase active du catalyseur.

Le catalyseur selon l'invention, notamment catalyseur au nickel, activé initialement comme indiqué ci-dessus, permet d'obtenir un taux de conversion de l'H2S en soufre égal à 100 % dès le démarrage de l'oxydation de l'H2S par l'oxygène du gaz renfermant de l'oxygène libre.

Le catalyseur selon l'invention et tout particulièrement le catalyseur au nickel, peut encore faire l'objet d'une activation initiale équivalente à l'activation au soufre élémentaire décrite plus haut, par mise en contact dudit catalyseur avec un mélange gazeux d'H₂S et d'un gaz inerte, en opérant à des températures comprises entre 250°C et 400°C pendant une durée suffisante, en général comprise entre 1 heure et 15 heures, pour réaliser une sulfuration maximale du métal de la phase active du catalyseur, ledit mélange gazeux pouvant renfermer notamment entre 0,2 % et 30 % ou plus d'H₂S en volume. En particulier, le mélange gazeux renfermant H₂S, utilisé pour l'activation initiale du catalyseur d'oxydation, peut être constitué du gaz à traiter, lorsque ce dernier ne renferme pas, outre H₂S, de composantes susceptibles de réagir, aux températures d'activation, avec la phase active du catalyseur.

Le gaz renfermant de l'H₂S en faible concentration, que l'on traite par le procédé selon l'invention, peut avoir des origines diverses. En particulier, un tel gaz peut être un gaz naturel à faible teneur en H₂S ou encore un gaz provenant de la gazéification du charbon ou des huiles lourdes, voire même un gaz résultant de l'hydrogénation d'un gaz résiduaire, par exemple un gaz résiduaire d'usine à soufre, renfermant des composés soufrés tels que SO₂, mercaptans, COS, CS₂ convertibles en H₂S sous l'action de l'hydrogène ou de la vapeur d'eau, ou bien encore un gaz résultant du traitement, au contact d'un catalyseur CLAUS susceptible de promouvoir la réaction de formation de soufre entre H₂S et SO₂, d'un effluent gazeux renfermant H₂S et SO₂ dans un rapport molaire H₂S : SO₂ supérieur à 2 : 1 et tel que ledit gaz résultant contienne surtout H₂S et pas ou très peu de SO₂ comme composés soufrés. Le procédé selon l'invention peut s'appliquer au traitement de gaz renfermant H₂S en concentration comprise entre 0,001 % et 25 % en volume et plus spécialement allant de 0,01 % à 20 % en volume. Le gaz à traiter peut encore renfermer des composés organiques du soufre tels que mercaptans, COS, CS₂, en concentration globale pouvant aller jusqu'à environ 1 % en volume. On pourrait, en utilisant le procédé selon l'invention, traiter des gaz renfermant H₂S en concentration supérieure à 25 % en volume, toutefois dans ce cas on utilise de préférence les procédés conventionnels de production de soufre comportant une étape de réaction thermique.

Lors de la mise en oeuvre du procédé selon l'invention aux températures inférieures au point de rosée du soufre formé au cours de la réaction d'oxydation de l'H₂S, c'est-à-dire aux températures dans l'intervalle 30 °C à 180 °C et plus particulièrement dans l'intervalle 80 °C à 160 °C, la mise en contact du gaz à traiter, qui renferme de préférence moins de 5 % d'H₂S en volume et tout particulièrement moins de 2 % d'H₂S en volume, avec le catalyseur d'oxydation à support de carbure de silicium conduit à la formation de soufre qui se dépose sur le catalyseur.

Si la concentration en H₂S ou/et la température du gaz à traiter renfermant H₂S amené au contact du catalyseur d'oxydation, sont telles que, du fait de la forte exothermicité de la réaction H₂S + 1/2 O₂ → S + H₂O, la température du milieu réactionnel, à l'issue de l'oxydation, est susceptible de dépasser la limite de température au-delà de laquelle la réaction ne présente plus la sélectivité recherchée, on évacue les calories dégagées par ladite réaction en soumettant le catalyseur à un refroidissement, par toute méthode connue. On peut par exemple, réaliser ce refroidissement à l'aide d'un fluide froid circulant en échange indirect de chaleur avec ledit catalyseur au sein de ce dernier. On peut encore opérer en plaçant le catalyseur dans un réacteur tubulaire constitué de tubes disposés dans une calandre avec, par exemple, le catalyseur présent dans les tubes et un fluide froid circulant entre les tubes côté calandre. On peut également effectuer l'oxydation catalytique dans un réacteur à plusieurs étages de catalyseur avec refroidissement du milieu réactionnel entre les étages successifs par échange indirect de chaleur avec un fluide froid, l'échange de chaleur ayant lieu à l'intérieur ou à l'extérieur du réacteur d'oxydation.

Comme le gaz à traiter renferme en plus d'H₂S une quantité importante d'eau, à savoir 15 % à 30 % en volume, les températures d'oxydation de l'H₂S en soufre inférieures au point de rosée du soufre formé lors de l'oxydation sont choisies de préférence pour être supérieures au point de rosée de l'eau contenue dans le gaz à traiter.

Au cours de l'oxydation de l'H₂S en soufre aux températures inférieures au point de rosée du soufre formé, le catalyseur d'oxydation se charge progressivement en soufre. Périodiquement, on procède à la régénération du catalyseur chargé de soufre par balayage dudit catalyseur à l'aide d'un gaz non oxydant en opérant à des températures comprises entre 200°C et 500 °C et de préférence entre 230 °C et 450 °C pour vaporiser le soufre retenu sur le catalyseur, puis on refroidit le catalyseur régénéré jusqu'à une température inférieure au point de rosée du soufre pour une nouvelle mise en oeuvre de la réaction d'oxydation, ce refroidissement étant réalisé au moyen d'un gaz ayant une température appropriée inférieure à 180 °C.

Le gaz de balayage, utilisé pour la régénération du catalyseur chargé de soufre, peut être tel que méthane, azote, CO₂ ou mélanges de tels gaz ou peut encore consister en une fraction du courant gazeux issu de l'étape d'oxydation ou en une fraction du gaz à traiter. Le gaz de balayage utilisé pour la régénération précitée peut éventuellement contenir une certaine proportion d'un composé réducteur gazeux tel que, par exemple, H₂, CO, ou H₂S, au moins au cours de la phase finale de la régénération, c'est-à-dire après la vaporisation de la plus grande partie du soufre déposé sur le catalyseur d'oxydation.

La mise en oeuvre de la réaction d'oxydation selon l'invention aux températures inférieures au point de rosée du soufre formé, peut être réalisée dans une zone unique d'oxydation renfermant le catalyseur d'oxydation à support de carbure de silicium, qui opère alternativement en phase d'oxydation et en phase de régénération/refroidissement. Une telle mise en oeuvre est retenue lorsque le gaz à traiter renferme peu d'H₂S et que, de ce fait, la régénération du catalyseur est peu fréquente. Avantageusement, la mise en oeuvre de la réaction catalytique est réalisée dans une pluralité de zones d'oxydation renfermant chacune le catalyseur d'oxydation à support de carbure de silicium, qui opèrent de telle sorte que l'une au moins desdites zones opère en phase de régénération/refroidissement, tandis que les autres zones sont en phase d'oxydation catalytique. On peut encore opérer en ayant une ou plusieurs zones en phase de réaction d'oxydation, au moins une zone en phase de régénération et au moins une zone en phase de refroidissement.

Le gaz utilisé pour la régénération du catalyseur d'oxydation circule de préférence en circuit fermé à partir d'une zone de chauffage, en passant successivement par la zone catalytique en cours de régénération et une zone de refroidissement, dans laquelle la majeure partie du soufre présent dans ledit gaz est séparée par condensation, pour revenir à la zone de chauffage. Bien entendu, le gaz de régénération peut également circuler en circuit ouvert.

Le gaz utilisé pour le refroidissement du catalyseur d'oxydation régénéré est du même type que celui employé pour la régénération du catalyseur chargé de soufre. Ledit gaz peut éventuellement, contenir de l'oxygène dans une proportion inférieure ou égale à celle utilisée en phase d'oxydation catalytique. Les circuits de gaz de régénération et de gaz de refroidissement peuvent être indépendants l'un de l'autre. Toutefois, selon un mode de réalisation, le circuit de gaz de régénération, défini plus haut, peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

Le mode de mise en oeuvre du procédé selon l'invention d'oxydation de l'H₂S en soufre, aux températures inférieures au point de rosée du soufre formé lors de l'oxydation, peut avantageusement constituer l'étape d'oxydation catalytique de l'H₂S qui fait suite à l'étape de réaction CLAUS à température inférieure à 180 °C dans le procédé de désulfuration de gaz contenant de l'H₂S décrit dans la citation FR-A-2277877.

L'invention est illustrée par l'exemple suivant donné à titre non limitatif.

### EXEMPLE

On traitait un gaz acide pauvre en H₂S, ledit gaz étant constitué, en volume, de 95,5 % de CO₂, 4 % d'H₂O et 0,5 % d'H₂S.

Le traitement dudit gaz acide était réalisé à 100°C, température inférieure au point de rosée du soufre produit par l'oxydation de l'H₂S de ce gaz acide, en faisant appel à un catalyseur consistant en carbure de silicium, renfermant en poids 4 % de nickel et présentant une surface spécifique BET égale à 210 m²/g.

Ledit catalyseur était obtenu par imprégnation de grains de carbure de silicium microporeux à l'aide d'une quantité appropriée d'acétate de nickel en solution aqueuse, puis séchage à 100 °C du produit imprégné, calcination du produit séché à 300 °C pendant 3 heures et enfin réduction du produit calciné sous un courant d'hydrogène à 400°C pendant 10 heures. Les grains de carbure de silicium, d'un diamètre moyen de 1 mm, présentait une surface spécifique BET de 240 m²/g.

On opérait dans une installation constituée de deux réacteurs d'oxydation catalytique montés en parallèle, chaque réacteur présentant une entrée et une sortie séparées par un lit fixe du catalyseur précité. Lesdits réacteurs étaient agencés, en outre, de telle sorte qu'alternativement, par l'intermédiaire de vannes commutables par une horloge, l'un des réacteurs opérait en phase de réaction, c'est-à-dire avait son entrée reliée à un conduit d'amenée des gaz, sur lequel était monté un échangeur indirect de chaleur et, en aval de l'échangeur, un piquage d'injection d'air, et sa sortie connectée à un conduit d'évacuation des gaz, et l'autre réacteur opérait en phase de régénération/refroidissement, c'est-à-dire était disposé dans un circuit de régénération/refroidissement équipé de moyens pour assurer la circulation d'un gaz de balayage à travers le réacteur d'oxydation depuis un réchauffeur jusqu'à un condenseur à soufre et retour audit réchauffeur et pour faire circuler ensuite un gaz froid, de même composition que le gaz de régénération, à travers le réacteur ayant subi la régénération.

Le gaz acide pauvre à traiter arrivait par le conduit d'amenée des gaz avec un débit égal à 2241 Nm³/h et une température d'environ 30 °C et était porté à une température de 80 °C dans l'échangeur monté sur ledit conduit, puis il était mélangé, par le piquage, avec 89,6 Nm³/h d'air et 1000 Nm³/h d'un gaz inerte chargé de 55 % en volume de vapeur d'eau et porté à 100°C. La quantité de vapeur d'eau contenue dans le mélange final était d'environ 20 % en volume. Le mélange obtenu pénétrait dans le réacteur en phase d'oxydation avec une température de 86°C. Le temps de contact du mélange gazeux, passant dans le réacteur en phase de réaction d'oxydation, avec la couche de catalyseur contenue dans ledit réacteur était égal à 10 secondes. Le taux de conversion de l'H₂S, dans le réacteur en phase de réaction d'oxydation, était égal à 100 %. A la sortie dudit réacteur, on évacuait un courant gazeux ayant une température d'environ 110°C et renfermant moins de 100 vpm de SO₂, lequel courant gazeux était acheminé vers un incinérateur avant son rejet à l'atmosphère.

Dans le réacteur opérant en phase de régénération/refroidissement, on injectait un gaz de balayage consistant en azote aux fins de régénération du catalyseur d'oxydation chargé de soufre, puis de refroidissement du catalyseur régénéré. Pour la régénération le gaz de balayage était injecté dans ledit réacteur avec une température comprise entre 250 °C et 350 °C et un débit égal à 10 000 Nm³/h. A l'issue de la phase de régénération du catalyseur, la température du gaz de balayage était abaissée à environ 125 °C et l'on poursuivait le balayage avec le gaz de balayage refroidi jusqu' ce que le lit de catalyseur régénéré atteigne sensiblement ladite température. A la régénération sous azote, on récupère la totalité du soufre déposé sur le catalyseur.

La présence de la quantité précitée de vapeur d'eau dans le mélange réactionnel et plus généralement d'une quantité comprise entre 15 % et 30 % en volume, permet de prolonger substantiellement dans le temps le maintien de l'activité désulfurante optimale du catalyseur. La vapeur d'eau joue le rôle de dispersant du soufre déposé sur le catalyseur et préserve ainsi l'accès des réactifs aux sites actifs du catalyseur.

## Revendications

1. Procédé pour oxyder en soufre, par voie catalytique, l'H₂S contenu en faible concentration dans un gaz, lequel procédé est du type dans lequel on fait passer ledit gaz renfermant H₂S avec un gaz renfermant de l'oxygène libre, en quantité propre à fournir un rapport molaire O₂ : H₂S allant de 0,05 à 10, au contact d'un catalyseur d'oxydation sélective de l'H₂S en soufre constitué d'une phase catalytiquement active associée à un support en carbure de silicium, ladite phase active renfermant au moins un métal se présentant sous la forme d'un composé de métal ou/et à l'état élémentaire, et il se **caractérise en ce que** l'on met en oeuvre l'oxydation de l'H₂S au contact du catalyseur à des températures inférieures au point de rosée du soufre formé lors de l'oxydation, ledit soufre se déposant sur le catalyseur, et **en ce que** le gaz à traiter renfermant H₂S contient également une quantité d'eau allant de 15 % à 30 % en volume.

2. Procédé selon la revendication 1, **caractérisé en ce que** l'on met en oeuvre l'oxydation de l' H₂S au contact du catalyseur à des températures inférieures au point de fusion du soufre.

3. Procédé selon la revendication 1 ou 2, **caractérisé en ce que** la phase active associée au support de carbure de silicium, pour constituer le catalyseur d'oxydation, consiste en au moins un métal de transition tel que nickel, cobalt, fer, cuivre, argent, manganèse, molybdène, chrome, titane, tungstène et vanadium, ledit métal se présentant sous la forme d'oxyde, de sel ou de sulfure ou/et à l'état élémentaire.

4. Procédé selon l'une des revendications 1 à 3, **caractérisé en ce que** le support en carbure de silicium du catalyseur d'oxydation constitue au moins 40 % en poids dudit catalyseur.

5. Procédé selon la revendications 4, **caractérisé en ce que** le support en carbure de silicium du catalyseur d'oxydation constitue au moins 50 % en poids dudit catalyseur.

6. Procédé selon l'une des revendications 1 à 5, **caractérisé en ce que** la phase active du catalyseur d'oxydation, comptée en poids de métal, représente 0,1 % à 20 % du poids du catalyseur.

7. Procédé selon la revendications 6, **caractérisé en ce que** la phase active du catalyseur d'oxydation, comptée en poids de métal, représente 0,2 % à 15 % et plus spécialement 0,2 à 7 % du poids du catalyseur.

8. Procédé selon l'une des revendications 1 à 7, **caractérisé en ce que** la surface spécifique du catalyseur, déterminée par la méthode BET d'absorption d'azote, prend des valeurs allant de 2 m²/g à 600m²/g.

9. Procédé selon l'une des revendications 1 à 8, **caractérisé en ce que** le gaz renfermant de l'oxygène libre est utilisé en quantité propre à fournir un rapport molaire O₂: H₂S allant de 0,1 à 7.

10. Procédé selon la revendication 9, **caractérisé en ce que** le gaz renfermant de l'oxygène libre est utilisé en quantité propre à fournir un rapport molaire O₂ : H₂S allant de 0,2 à 4.

11. Procédé selon l'une des revendications 1 à 10, **caractérisé en ce que** les temps de contact du milieu réactionnel gazeux avec le catalyseur d'oxydation, dans les conditions normales de pression et de température, vont de 0,5 secondes à 20 secondes et de préférence de 1 seconde à 12 secondes.

12. Procédé selon l'une des revendications 1 à 11, **caractérisé en ce que** la teneur en H₂S du gaz à traiter est comprise entre 0,001 %, et 25 % en volume et va plus particulièrement de 0,01 % à 20 % en volume.

13. Procédé selon l'une des revendications 1 à 12, **caractérisé en ce que**, préalablement à la mise en oeuvre de l'oxydation, le catalyseur d'oxydation à support en carbure de silicium est activé par mise en contact avec du soufre, en quantité représentant en excès jusqu'à 300 % molaire de la quantité correspondant à une sulfuration maximale du métal de la phase active du catalyseur d'oxydation, ladite mise en contact étant réalisée sous atmosphère inerte à des températures comprises entre 250 °C et 400 °C.

14. Procédé selon l'une des revendications 1 à 12, **caractérisé en ce que**, préalablement à la mise en oeuvre de l'oxydation, le catalyseur d'oxydation à support en carbure de silicium est activé par mise en contact avec un mélange gazeux d'H₂S et d'un gaz inerte, en opérant à des températures comprises entre 250 °C et 400 °C et pendant une durée comprise entre 1 heure et 15 heures pour réaliser une sulfurisation maximale du métal de la phase active du catalyseur d'oxydation, ledit mélange gazeux renfermant plus particulièrement 0,2 % à 30 % d'H₂S en volume.

15. Procédé selon l'une des revendications 1 à14, **caractérisé en ce que** le catalyseur d'oxydation chargé de soufre est soumis périodiquement à une régénération par balayage à l'aide d'un gaz en opérant à des températures comprises entre 200 °C et 500 °C et de préférence entre 230 ° et 450 °C pour vaporiser le soufre retenu sur le catalyseur, puis on refroidit le catalyseur régénéré jusqu'à une température inférieure au point de rosée du soufre pour une nouvelle mise en oeuvre de l'oxydation d'H₂S, ce refroidissement étant réalisé au moyen d'un gaz ayant une température inférieure à 180°C.

## Patentansprüche

1. Verfahren zur katalytischen Oxidation von in einer geringen Konzentration in einem Gas enthaltenem Schwefelwasserstoff zur Bildung von Schwefel, bei welchem Verfahren das Schwefelwasserstoff enthaltende Gas von einem Gas durchströmt wird, das ungebundenen Sauerstoff in einer Menge enthält, die geeignet ist, um ein Molverhältnis von 0₂ : H₂S von zwischen 0,05 und 10 herzustellen, in Kontakt mit einem Katalysator für die selektive Oxidation von Schwefelwasserstoff zu Schwefel, der in einer mit einer Trägersubstanz aus Siliziumkarbid assoziierten katalytisch aktiven Phase gebildet ist, wobei die aktive Phase zumindest ein Metall enthält, das in Form einer Metallverbindung und/oder im elementaren Zustand vorhanden ist, und **dadurch gekennzeichnet, dass** die Oxidation des Schwefelwasserstoffes in Kontakt mit dem Katalysator bei Temperaturen unterhalb des Taupunktes des bei der Oxidation gebildeten Schwefels durchgeführt wird, wobei sich der Schwefel auf dem Katalysator absetzt, und **dadurch gekennzeichnet, dass** das zu behandelnde, Schwefelwasserstoff enthaltende Gas außerdem Wasser in einer Menge von 15 bis 30 Volumen-% enthält.

2. Verfahren nach Anspruch 1, **dadurch gekennzeichnet, dass** die Oxidation von Schwefelwasserstoff in Kontakt mit dem Katalysator bei Temperaturen unterhalb des Schmelzpunktes von Schwefel durchgeführt wird.

3. Verfahren nach Anspruch 1 oder 2, **dadurch gekennzeichnet, dass** die mit dem Siliziumkarbidträger assoziierte aktive Phase zur Bildung des Oxidationskatalysators zumindest aus einem Übergangsmetall besteht, wie beispielsweise Nickel, Kobalt, Eisen, Kupfer, Silber, Mangan, Molybdän, Chrom, Titan, Wolfram und Vanadium, das in Form von Oxid, Salz oder Sulfid und/oder im elementaren Zustand vorhanden ist.

4. Verfahren nach einem der Ansprüche 1 bis 3, **dadurch gekennzeichnet, dass** der Siliziumkarbidträger des Oxidationskatalysators zumindest 40 Gew.-% des Katalysators bildet.

5. Verfahren nach Anspruch 4, **dadurch gekennzeichnet, dass** der Siliziumkarbidträger des Oxidationskatalysators zumindest 50 Gew.-% des Katalysators bildet.

6. Verfahren nach einem der Ansprüche 1 bis 5, **dadurch gekennzeichnet, dass** die aktive Phase des Oxidationskatalysators, bezogen auf das Metallgewicht, 0,1 bis 20 Gew.-% des Katalysators darstellt.

7. Verfahren nach Anspruch 6, **dadurch gekennzeichnet, dass** die aktive Phase des Oxidationskatalysators, bezogen auf das Metallgewicht, 0,2 bis 15 Gew.-% und vorzugsweise 0,2 bis 7 Gew.-% des Katalysators darstellt.

8. Verfahren nach einem der Ansprüche 1 bis 7, **dadurch gekennzeichnet, dass** die spezifische Oberfläche des Katalysators, bestimmt durch die Methode BET der Aufstickung ("d'absorption d'azote"), Werte von 2 m²/g bis 600 m²/g darstellt.

9. Verfahren nach einem der Ansprüche 1 bis 8, **dadurch gekennzeichnet, dass** das ungebundenen Sauerstoff enthaltende Gas in einer Menge verwendet wird, die geeignet ist, ein Molverhältnis von O₂ : H₂S von 0,1 bis 7 zu erhalten.

10. Verfahren nach Anspruch 9, **dadurch gekennzeichnet, dass** das ungebundenen Sauerstoff enthaltende Gas in einer Menge verwendet wird, die geeignet ist, ein Molverhältnis von O₂ : H₂S von 0,2 bis 4 zu erhalten.

11. Verfahren nach einem der Ansprüche 1 bis 10, **dadurch gekennzeichnet, dass** die Verweilzeit des reaktionsfähigen, gasförmigen Mediums mit dem Oxidationskatalysator, unter normalen Bedingungen in Bezug auf Druck und Temperatur, von 0,5 Sekunden bis 20 Sekunden und vorzugsweise von 1 Sekunde bis 12 Sekunden beträgt.

12. Verfahren nach einem der Ansprüche 1 bis 11, **dadurch gekennzeichnet, dass** der Gehalt an Schwefelwasserstoff des zu behandelnden Gases zwischen 0,001 und 25 Volumen-% und vorteilhafterweise zwischen 0,01 und 20 Volumen-% beträgt.

13. Verfahren nach einem der Ansprüche 1 bis 12, **dadurch gekennzeichnet, dass** vor der Durchführung der Oxidation der Oxidationskatalysator mit Siliziumkarbidträger durch In-Kontakt-bringen mit Schwefel aktiviert wird, in einem molaren Überschuß von bis zu 300 % der Menge, die einer maximalen Schwefelung des Metalls der aktiven Phase des Katalysators entspricht, wobei das In-Kontakt-bringen in einer Inertatmosphäre bei Temperaturen von zwischen 250°C und 400°C stattfindet.

14. Verfahren nach einem der Ansprüche 1 bis 12, **dadurch gekennzeichnet, dass** vor der Durchführung der Oxidation der Oxidationskatalysator mit Siliziumkarbidträger durch In-Kontakt-bringen mit einer gasförmigen Mischung aus Schwefelwasserstoff und einem Inertgas bei Temperaturen von zwischen 250°C und 400°C während eines Zeitraumes von zwischen 1 Stunde und 15 Stunden aktiviert wird, um eine maximale Schwefelung des Metalls der aktiven Phase des Oxidationskatalysators zu erhalten, wobei die gasförmige Mischung insbesondere 0,2 bis 30 Volumen-% Schwefelwasserstoff enthält.

15. Verfahren nach einem der Ansprüche 1 bis 14, **dadurch gekennzeichnet, dass** der mit Schwefel angereicherte Katalysator regelmäßig einer Regenerierung durch Spülung mit einem Gas bei Temperaturen von zwischen 200°C und 500°C und vorzugsweise zwischen 230°C und 450°C unterzogen wird, um den auf dem Katalysator abgesetzten Schwefel zu verdampfen, wonach der regenerierte Katalysator bis auf eine Temperatur unterhalb des Taupunktes des Schwefels abgekühlt wird, um eine erneute Oxidation des Schwefelwasserstoffs durchzuführen, wobei diese Abkühlung mit Hilfe eines Gases erfolgt, das eine Temperatur von unter 180°C aufweist.

## Claims

1. Process for oxidizing the H₂S present at a low concentration in a gas to sulphur by a catalytic route, which process is of the type in which the said gas containing H₂S is passed with a gas containing free oxygen, in a quantity such as to provide an 0₂:H₂S molar ratio ranging from 0.05 to 10, in contact with a catalyst for selectively oxidizing H₂S to sulphur consisting of a catalytically active phase used in combination with a support, the said active phase containing at least one metal existing in the form of a metal compound and/or in the elemental state, **characterized in that** the oxidation of H₂S in contact with the catalyst is carried out at temperatures below the dew point of the sulphur formed by the oxidation, the sulphur being deposited on the catalyst, and **in that** the gas to be treated contains, in addition to H₂S, a quantity of water ranging from 15 to 30% by volume.

2. The process according to claim 1, **characterised in that** the oxygenation of the H₂S in contact with the catalyst is carried out at temperatures below the melting point of the sulphur.

3. Process according to Claim 1 or 2, **characterized in that** the active phase used in combination with the silicon carbide support in order to form the oxidation catalyst is composed of at least one transition metal, especially a metal such as nickel, cobalt, iron, copper, silver, manganese, molybdenum, chromium, titanium, tungsten and vanadium, the said metal being in the oxide, salt or sulphide form and/or in the elemental state.

4. Process according to one of claims 1 to 3, **characterized in that** the silicon carbide support of the oxidation catalyst forms at least 40% by weight of the said catalyst.

5. Process according to Claim 4, **characterized in that** the silicon carbide support of the oxidation catalyst forms at least 50% by weight of the said catalyst.

6. Process according to one of claims 1 to 5, **characterized in that** the active phase of the oxidation catalyst, expressed as weight of metal, represents 0.1 to 20% of the weight of the catalyst.

7. Process according to Claim 6, **characterized in that** the active phase of the oxidation catalyst, expressed as weight of metal, represents 0.2 to 15% and more especially 0.2 to 7% of the weight of the catalyst

8. Process according to one of Claims 1 to 7, **characterized in that** the specific surface of the catalyst, determined by the BET nitrogen adsorption method, takes values ranging from 2 m²/g to 600 m²/g.

9. Process according to one of Claims 1 to 8, **characterized in that** the gas containing free oxygen is used in a quantity such as to provide an 0₂:H₂S molar ratio ranging from 0.1 to 7

10. Process according to claim 9, **characterized in that** the gas containing free oxygen is used in a quantity such as to provide an 0₂:H₂S molar ratio ranging from 0.2 to 4.

11. Process according to one of Claims 1 to 10, **characterized in that** the contact times of the gaseous reaction mixture with the oxidation catalyst, in normal pressure and temperature conditions, range from 0.5 of a second to 20 seconds and preferably from 1 second to 12 seconds.

12. Process according to one of Claims 1 to 11, **characterized in that** the H₂S content of the gas to be treated is between 0.001% and 25% by volume and ranges more particularly from 0.01% to 20% by volume.

13. Process according to one of Claims 1 to 12, **characterized in that**, prior to implementing the oxidation, the oxidation catalyst containing a silicon carbide support is activated by bringing into contact with sulphur, in a quantity representing an up to 300 mol % excess of the quantity corresponding to maximum sulphurization of the metal of the active phase of the oxidation catalyst, the said operation of bringing into contact being carried out under an inert atmosphere at temperatures of between 250°C and 400°C.

14. Process according to one of claims 1 to 12, **characterized in that**, prior to implementing the oxidation, the catalyst containing a silicon carbide support is activated by bringing into contact with a gas mixture containing H₂S and an inert gas, the operation being carried out at temperatures of between 250°C and 400°C and for a period of time of between 1 hour and 15 hours, in order to produce maximum sulphurization of the metal of the active phase of the oxidation catalyst, the said gas mixture more particularly containing 0.2% to 30% by volume of H₂S.

15. Process according to one of claims 1 to 14, **characterized in that** the sulphur-laden oxidation catalyst is periodically subjected to regeneration by purging with a gas, the operation being carried out at temperatures of between 200°C and 500°C and preferably between 230°C and 450°C, to vaporize the sulphur retained on the catalyst, and the regenerated catalyst is then cooled to a temperature below the dew point of the sulphur for a new implementation of the oxidation of H₂S, this cooling being carried out with a gas which is at a temperature below 180°C.
